# EUROPEAN PATENT SPECIFICATION

(11) **EP 1 426 589 B1**
(45) Date of publication and mention of the grant of the patent: **24.01.2007**
(21) Application number: 03026446.9
(22) Date of filing: 19.11.2003
(51) Int. Cl.: F02D 9/04, F02D 9/10, F02M 25/07, F16K 51/00, F16K 1/22

(54) **Exhaust gas recirculation control device**
Steuervorrichtung für Abgasrückführung
Dispositif de commande de recirculation de gaz d'échappement

(30) Priority: 20.11.2002 JP 2002336081
(43) Date of publication of application: 09.06.2004
(73) Proprietor: DENSO CORPORATION, Kariya-city, Aichi-pref. 448-8661 (JP)
(72) Inventor: Nanba, Kunio, Kariya-city Aichi-pref. 448-8661 (JP); Hashimoto, Koji, Kariya-city Aichi-pref. 448-8661 (JP); Sasaki, Kazushi, Kariya-city Aichi-pref. 448-8661 (JP)
(74) Representative: TBK-Patent

(56) References cited:
- EP-A- 1 186 762
- EP-A- 1 231 375
- EP-A- 1 233 222
- EP-A- 1 420 158
- US-A- 5 465 691
- PATENT ABSTRACTS OF JAPAN vol. 2003, no. 02, 5 February 2003 (2003-02-05) & JP 2002 285918 A (DENSO CORP; TOYOTA MOTOR CORP), 3 October 2002 (2002-10-03)

## Description

The present invention relates to an exhaust gas recirculation control device according to the preamble of claim 1.

A known exhaust gas recirculation control device decreases maximum combustion temperature by mixing (recirculating) part of exhaust gas of an internal combustion engine into intake air in order to reduce toxic substances such as nitrogen oxides included in exhaust gas, for instance, as disclosed in WO/2001/007808 or JP-10-103166A.

WO/2001/007808 discloses butterfly type valve structure of the exhaust gas recirculation control device for controlling the flow of the exhaust gas. The valve structure of the related art disclosed in WO/2001/007808 has a valve pipe for guiding the exhaust gas, and a butterfly valve disposed in the valve pipe. The butterfly valve can rotate between an open position and a close position. The butterfly valve is immovably fixed to a rotating shaft capable of regulating its position. The rotating shaft is offset from a central axis of the valve pipe by a predetermined angle. The butterfly valve is disposed in an area where the butterfly valve can block the valve pipe air-tightly. In order to reduce the effect of inclination of the rotating shaft on rotational movement, a bearing on a valve housing side for slidably holding the rotating shaft is lengthened, or vibration at both ends of the rotating shaft is limited by a bearing disposed on the valve pipe side and another bearing disposed in a part of an intake pipe.

JP-10-103166A discloses poppet valve type valve structure for preventing leakage of engine oil adhering to an inside of a valve pipe to an outside through a control valve. In the related art disclosed in JP-10-103166 A, a flange portion protruding at least upward is formed on an end side of a protrusion, or a groove is formed by the protrusion and the flange portion on the end side of the protrusion in an area of a valve housing, which also functions as an intake passage. The protrusion functions as a part of a holding portion for slidably holding a valve shaft of a poppet valve. Thus, the engine oil flowing downward along an inner wall of the valve housing is prevented from leaking out of the valve housing through a gap between the valve shaft and an inner periphery of the protrusion on an end side of the holding portion.

In both related arts disclosed in the above patent documents, a minute gap is formed between the rotating shaft and the bearing or between the valve shaft and the protrusion. Therefore, there is a possibility that carbon and the like included in the exhaust gas may adhere to an inner surface of the gap and may be deposited in the gap as deposits. In the structure disclosed in WO/2001/007808, there is a possibility that the deposits may be pushed into the gap between the rotating shaft and the bearing by exhaust gas pressure and the gap may be filled with the deposits when the butterfly valve is open. In this case, torque hysteresis during the rotational movement of the rotating shaft will be increased. In some cases, driving current of a motor for driving the rotating shaft will be increased and a failure will be detected or the motor will be burned out. In the structure disclosed in JP-10-103166 A, the engine oil adhering to a wall of the flange on the valve shaft side, which extends radially outward from the protrusion, will be carried along the valve shaft and will adhere to the inner surface of the gap between the valve shaft and the inner periphery of the protrusion. In some cases, there is a possibility that the engine oil may flow out of the valve housing through the gap.

It is therefore an object of the present invention to provide an exhaust gas recirculation control device capable of preventing sticking or poor operation of a rotating shaft and a bearing caused by deposits.

This object is achieved by an exhaust gas recirculation control device having the features of claim 1.

Advantageous further developments are defined in the dependent claims.

It is an advantage of the present invention to provide an exhaust gas recirculation control device, which is capable of preventing sticking or poor operation of a rotating shaft and a bearing caused by deposits and has structure for inhibiting deposition of the deposits in a gap between the rotating shaft and the bearing.

According to an aspect of the present invention, an exhaust gas recirculation control device has a valve housing formed with a gas passage inside, a butterfly valve capable of opening and closing the gas passage and a driving motor for driving a valve shaft of the butterfly valve to rotate. The exhaust gas recirculation control device recirculates exhaust gas, which is discharged from a combustion chamber of an internal combustion engine, to an intake pipe through the gas passage with the use of rotational movement of the driving motor. A valve member of the butterfly valve accommodated in the gas passage and a bearing of the valve housing are disposed on the valve shaft in a line in a longitudinal direction of the valve shaft. An accommodation hole for accommodating the valve shaft is formed between the gas passage and the bearing. A low-pressure communication passage opening into the accommodation hole and communicating with a low-pressure portion, pressure in which is lower than pressure in a portion upstream of the butterfly valve.

Thus, even if particulate matters and the like such as carbon included in the exhaust gas enter the gap between the valve shaft and the accommodation hole from the gas passage, the particulate matters and the like can be returned to the gas passage through the communication passage opening into the accommodation hole. Therefore, the particulate matters and the like changed into deposits through adhesion and deposition can be discharged to the communication passage from the accommodation hole before the particulate matters and the like enter the bearing, which holds the valve shaft. As a result, sticking caused by the deposits can be prevented.

Even if a pressure difference between the opening of the communication passage on the accommodation hole side and the gas passage downstream of the valve member is small, the pressure difference is enough unless the pressure difference is zero. If the pressure difference exerts an effect of returning the particulate matters and the like into the gas passage through the communication passage before the particulate matters and the like adhere to the bearing and are deposited there, the pressure difference is enough.

The features and other advantages of embodiments of the present invention will be appreciated, as well as methods of operation and the function of the related parts, from a study of the following detailed description, the appended claims, and the drawings, all of which form a part of this application. In the drawings:
Fig. 1 is a cross-sectional view showing an exhaust gas recirculation control device according to a first embodiment of the present invention;
Fig. 2 is a fragmentary cross-sectional view showing the exhaust gas recirculation control device of Fig. 1 taken along the line II-II;
Fig. 3 is an enlarged fragmentary cross-sectional view showing a substantial portion of an exhaust gas recirculation control device according to a second embodiment of the present invention;
Fig. 4 is an enlarged fragmentary cross-sectional view showing a substantial portion of an exhaust gas recirculation control device according to a third embodiment of the present invention;
Fig. 5 is an enlarged fragmentary cross-sectional view showing a substantial portion of an exhaust gas recirculation control device according to a fourth embodiment of the present invention;
Fig. 6 is an enlarged fragmentary cross-sectional view showing a substantial portion of an exhaust gas recirculation control device according to a fifth embodiment of the present invention;
FIG. 7 is a cross-sectional view showing an exhaust gas recirculation control device according to a sixth embodiment of the present invention;
FIG. 8 is a cross-sectional view showing an exhaust gas recirculation control device according to a seventh embodiment of the present invention;
FIG. 9 is a fragmentary cross-sectional view showing the exhaust gas recirculation control device of Fig. 8 taken along the line IX-IX;
FIG. 10 is a cross-sectional view showing an exhaust gas recirculation control device according to an eighth embodiment which is not part of the present invention; and
FIG. 11 is a schematic cross-sectional view showing an inside of a gas passage of the exhaust gas recirculation control device of FIG. 10 in a direction X.

### (First Embodiment)

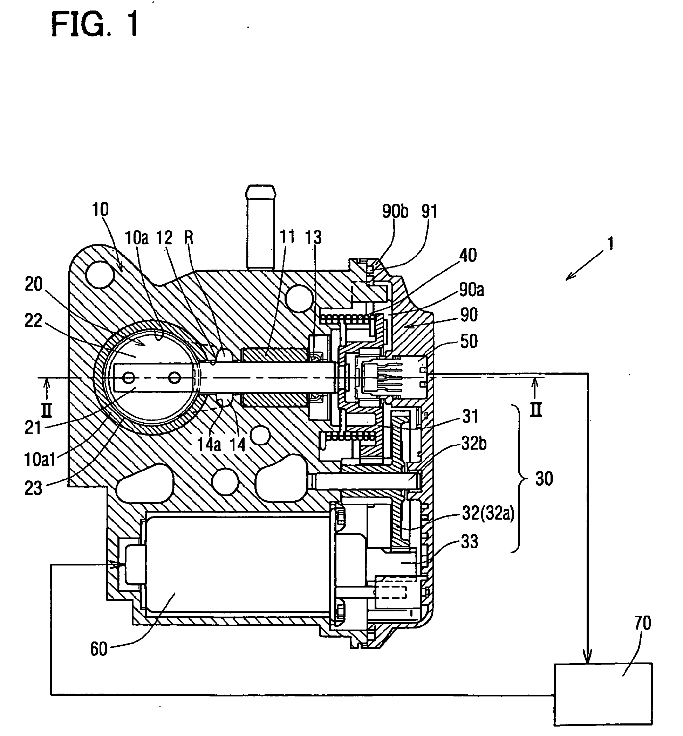

Referring to Fig. 1, an exhaust gas recirculation control device 1 of the first embodiment is illustrated.

As shown in Fig. 1, the exhaust gas recirculation control device 1 includes a valve housing 10 formed with a gas passage 10a inside, a butterfly valve 20, a speed-reduction device 30, a return spring 40 as a biasing member, a valve shaft opening degree sensor 50, a driving motor 60 and controlling means 70. The exhaust gas recirculation control device 1 recirculates exhaust gas discharged from combustion chambers of an internal combustion engine into an intake pipe through the gas passage 10a with the use of opening and closing motion of the butterfly valve 20. The driving motor 60 controls the rotational drive of the butterfly valve 20.

The butterfly valve 20 is disposed in the gas passage 10a formed in the valve housing 10. The butterfly valve 20 regulates a flow rate of the exhaust gas flowing into the downstream intake pipe by performing opening and closing operation of the gas passage 10a and by changing an opening area of the gas passage 10a. As shown in Fig. 1, the butterfly valve 20 has a valve shaft 21 rotatably held by a bearing 11 of the valve housing 10 and a valve member 22 fixed to the valve shaft 21 for varying the opening area of the gas passage 10a by opening or closing the gas passage 10a. The valve housing 10 providing the gas passage 10a is formed of die-cast aluminum alloy. An inner wall of the gas passage 10a is provided by a nozzle 10a1 formed of stainless steel in a substantially cylindrical shape in order to introduce the high-temperature exhaust gas, which is discharged from the combustion chambers, into the gas passage 10a. The nozzle 10a1 is formed integrally with the valve housing 10 through a casting process or a press-fitting process. The valve housing 10 holds the valve shaft 21 rotatably through the bearing 11.

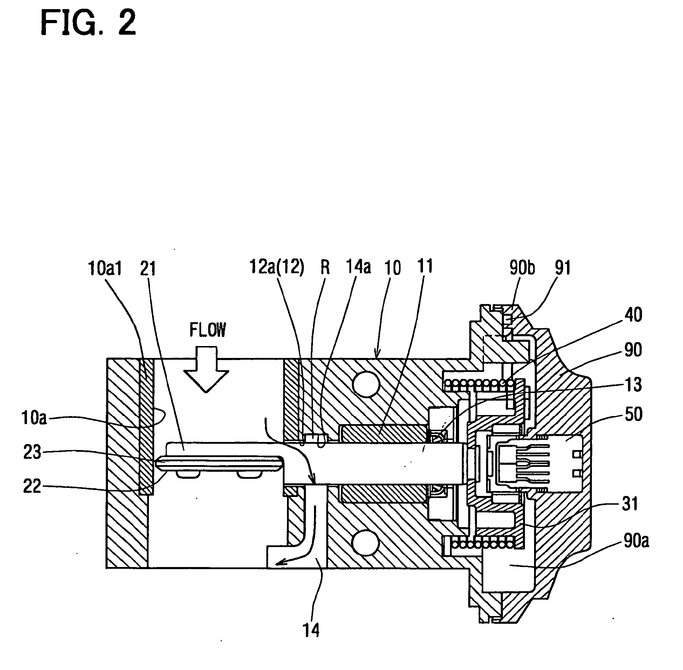

As shown in Figs. 1 and 2, the valve member 22 has known valve structure capable of varying the opening area of the gas passage 10a from a fully close position to a fully open position by opening or closing the gas passage 10a with the use of the rotation of the valve shaft 21. The valve member 22 shown in Figs. 1 and 2 is at the fully close position. More preferably, a seal ring 23 should be disposed around the valve member 22 as shown in Fig. 1. Thus, the valve member 22 can be seated on the inner periphery of the gas passage 10 (the inner periphery of the nozzle 10a1) more easily when the valve member 22 is fully closed. The valve member 22 should preferably be formed of the stainless steel, like the nozzle 10a1.

As shown in Fig. 1, the valve shaft 21 fixes the valve member 22 at its end. The bearing 11 is disposed in line with the valve member 22, in a direction in which the valve shaft 21 extends. Therefore, the single bearing 11 can rotatably hold the valve shaft 21. Thus, the number of the bearing 11, which can cause poor operation of the valve shaft 21, can be reduced. The poor operation of the valve shaft 21 can be caused if particulate matters such as carbon included in the exhaust gas or deposits of the particulate matters enter a gap between the valve shaft 21 and the bearing 11 from the gas passage 10a and adhere or are firmly fixed to an inner surface of the gap. Moreover, as shown in Fig. 1, the bearing 11 can be disposed in one side bearing structure, not in both sides bearing structure, on a driving force inlet side of the driving motor 60 for driving the valve shaft 21. As a result, even if the deposits are firmly fixed to the inner surface of the gap between the valve shaft 21 and the bearing 11, rotational driving torque required to strip off the firmly fixed deposits by the rotation of the valve shaft 21 can be reduced.

The positioning for disposing the bearing 11 in line with the valve member 22 in the longitudinal direction of the valve shaft 21 is not limited to the one side bearing structure, in which the valve member 22 is fixed on the end of the valve shaft 21 and the bearing 11 is disposed in line with the valve member 22. Alternatively, the both sides bearing structure, in which two bearings 11 are disposed on both sides of the valve shaft 21 across the valve member 22, may be employed.

Moreover, an accommodation hole 12 for accommodating the valve shaft 21 is formed between the gas passage 10a and the bearing 11. In the case where the particulate matters or the deposits included in the exhaust gas move toward the bearing 11 from the gas passage 10a, there is a possibility that the particulate matters or the deposits may reach the bearing 11 through the gap between the accommodation hole 12 and the valve shaft 21. Structure for preventing the particulate matters and the deposits from entering the gap between the bearing 11 and the valve shaft 21 will be explained after.

As shown in Fig. 1, an input gear 31 constituting the speed-reduction device 30 is engaged with the other end of the valve shaft 21. The input gear 31 is formed in the shape of a fan corresponding to an operation range of the butterfly valve 20, whose valve member 22 can move from the fully close position to the fully open position.

More preferably, an oil seal 13 should be disposed between the input gear 31 and the bearing 11 as shown in Fig. 1. Thus, the valve shaft 21 and the oil seal 13 can seal the area air-tightly, so the exhaust gas reaching the bearing 11 from the gas passage 10a can be prevented from leaking to a driving chamber 90a accommodating the speed-reduction device 30, the driving motor 60, the valve shaft opening degree sensor 50 and the like.

Moreover, a return spring 40 is disposed between the input gear 31 and the valve housing 10 as shown in Fig. 1. The return spring 40 biases the valve shaft 21 in a direction opposite from the rotational direction of the valve shaft 21 so that a stop position of the valve member 22 is fixed to a predetermined position (for instance, an opener position shown in Fig. 11 explained in the eighth embodiment) when energization to the driving motor 60 is stopped.

The driving motor 60 has an output gear 33 constituting the speed-reduction device 30 on the end of a driving shaft. The driving motor 60, the valve shaft 21 and the gears 31, 32, 33, which constitute the speed-reduction device 30, are geometrically disposed so that they can be meshed with each other and can rotate. Any type of motor can be employed as the driving motor if the motor can rotate the valve shaft 21 fixed with the valve member 22 with the use of the controlling means 70 and can control the opening area of the gas passage 10a based on the valve shaft opening position of the valve member 22. A step motor and the like can be employed as the driving motor, other than the DC motor shown in Fig. 1. Preferably, the driving motor 60 should be the DC motor. The DC motor can generate relatively large rotational torque compared to the step motor or a solenoid motor. In the present embodiment, the driving motor 60 is explained as the DC motor, hereafter.

The speed-reduction device 30 includes the input gear 31, the output gear 33 and an intermediate gear 32 as shown in Fig. 1. The intermediate gear 32 has a gear portion 32a and a shaft portion 32b. The gear portion 32a is rotatably held by the shaft portion 32b. Thus, driving structure in which the valve shaft 21 is driven to rotate by the driving motor 60 through the speed-reduction device 30 is provided. Therefore, the driving force of the driving motor 60 can be increased by increasing a speed reducing ratio of the speed-reduction device 30. More specifically, the rotational driving force of the valve shaft 21 transmitted from the driving motor 60 through the speed-reduction device 30 can be increased. Thus, even if the deposits are formed and firmly fixed in the gap between the valve shaft 21 and the bearing 11, increase in operation current for the driving motor 60 can be inhibited. As a result, burnout of the driving motor 60 can be prevented.

The speed-reduction device 30 is accommodated by a lid 90 and the valve housing 10. A lid edge portion 90b of the lid 90 is fixed to the valve housing 10 through a sealing member 91. Thus, liquid and the like are prevented from entering the driving chamber 90a from an outside.

As shown in Fig. 1, the valve shaft opening degree sensor 50 is disposed on the side of the other end of the valve shaft 21 with the input gear 31. For instance, a Hall IC is used in the valve shaft opening degree sensor 50 for sensing the valve shaft opening degree of the butterfly valve 20.

Any type of electronic control device can be employed as the controlling means 70 if the electronic control device can control the opening degree of the valve shaft 21, or the open and close of the valve member 22, by performing the driving control of the driving motor 60. The controlling means 70 is a microcomputer including a CPU, ROM, RAM and the like. The controlling means 70 receives a signal representing the valve shaft opening degree from the valve shaft opening degree sensor 50. The controlling means 70 compares the valve shaft opening degree signal with a target value of the valve shaft opening degree and performs the driving control of the driving motor 60. Thus, the controlling means 70 controls the valve shaft opening degree of the valve shaft 21.

Next, the structure for preventing the particulate matters or deposits from entering the gap between the bearing 11 and the valve shaft 21 in the case where the particulate matters or the deposits included in the exhaust gas enter the accommodation hole 12 will be explained base on Figs. 1 and 2.

As shown in Figs. 1 and 2, the exhaust gas recirculation control device 1 of the present invention has a communication passage 14, which opens into the accommodation hole 12 and into the gas passage 10a downstream of the valve member 22. Thus, in the case where the particulate matters and the like included in the exhaust gas enter the gap between the valve shaft 21 and the accommodation hole 12 from the gas passage 10a, the particulate matters and the like are returned to the gas passage 10a through the communication passage 14. Therefore, the particulate matters included in the exhaust gas, which will be changed into the deposits if they adhere to the wall and are deposited there, can be discharged to the communication passage 14 from the accommodation hole 12 before the particulate matters reach the bearing 11. As a result, sticking caused by the deposits reaching the bearing 11 can be prevented.

Even if a pressure difference between the opening of the communication passage 14 on the accommodation hole 12 side and the gas passage 10a downstream of the valve member 22 is small, the pressure difference is enough unless the pressure difference is zero. If the pressure difference exerts the effect of returning the particulate matters and the like into the gas passage 10a through the communication passage 14 before the particulate matters and the like adhere to the bearing 11 and are deposited there, the pressure difference is enough.

The communication passage 14 should be preferably formed in a portion of the valve housing 10 formed of the die-cast aluminum alloy. Thus, the communication passage 14 can be formed integrally with the gas passage 10a and the like.

Moreover, as shown in Figs. 1 and 2, a concave groove (a deposit returning groove, hereafter) 14a should be preferably formed at the opening of the communication passage 14 on the accommodation hole 12 side so that a relatively large area is provided by the deposit returning groove 14a and the periphery of the valve shaft 21. The area provided by the deposit returning groove 14a and the periphery of the valve shaft 21 provides a deposit holding area R. Thus, the particulate matters and the like included in the exhaust gas entering the area through the gap between the valve shaft 21 and the accommodation hole 12 from the gas passage 10a can be held in the deposit holding area R until the particulate matters and the like are discharged through the communication passage 14. Thus, the adhesion or the deposition can be delayed.

As shown in Figs. 1 and 2, the deposit returning groove 14a should preferably extend circumferentially around the valve shaft 21, so the deposit returning groove 14a is formed substantially in the shape of a ring. Thus, even if the particulate matters and the like included in the exhaust gas enter the gap between the valve shaft 21 and the accommodation hole 12 and move toward the bearing 11, the particulate matters and the like can be collected in the deposit returning groove 14a and can be returned to the gas passage 10a through the communication passage 14 easily.

The deposit holding area R of the deposit returning groove 14a can surround the valve shaft 21 substantially throughout a circumference of the valve shaft 21 where the valve shaft 21 faces the deposit returning groove 14a.

### (Second Embodiment)

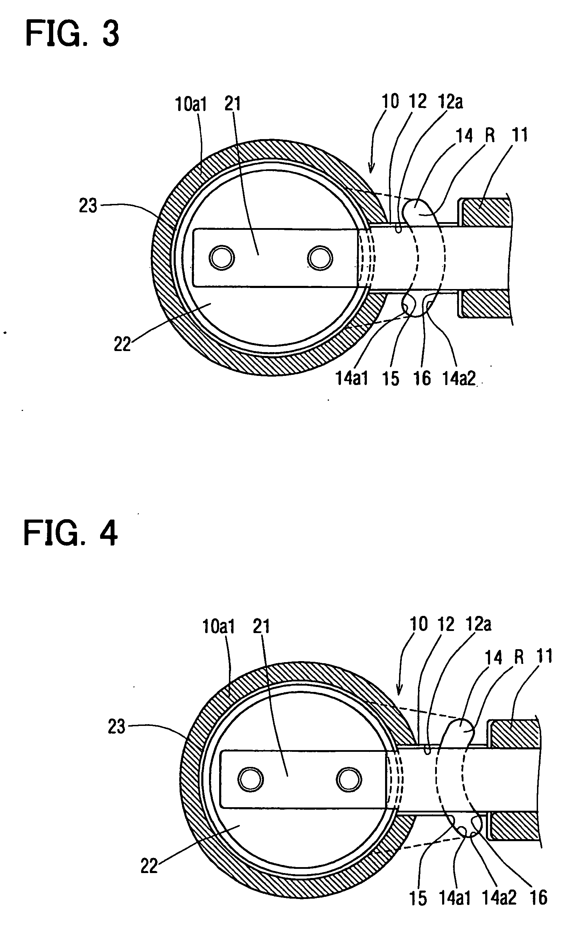

Next, an exhaust gas recirculation control device 1 according to the second embodiment will be explained based on Fig. 3.

In the second embodiment, an intersecting portion 15 is formed in the deposit returning groove 14a at an intersection of a first inner surface 14a1 of the deposit returning groove 14a on the gas passage 10a side and an inner surface 12a of the accommodation hole 12 as shown in Fig. 3. At the intersecting portion 15, the first inner surface 14a1 of the deposit returning groove 14a and the inner surface 12a of the accommodation hole 12 provide an acute angle.

Therefore, even if the particulate matters and the like enter the gap between the valve shaft 21 and the accommodation hole 12 and are deposited on the first inner surface 14a1 and a second inner surface 14a2 of the deposit returning groove 14a on the bearing 11 side, the rotational force required to strip off the deposits firmly fixed to the valve shaft 21 and the inner surface 14a1 can be reduced. As a result, the firmly fixed deposits can be eliminated easily by performing the driving control of the driving motor 60 to rotate the valve shaft 21.

### (Third Embodiment)

In an exhaust gas recirculation control system according to the third embodiment, an intersection portion 16 is formed at an intersection of the second inner surface 14a2 of the deposit returning groove 14a on the bearing 11 side and the inner surface 12a of the accommodation hole 12 as shown in Fig. 4. The second inner surface 14a2 of the deposit returning groove 14a on the bearing 11 side and the inner surface 12a of the accommodation hole 12 provide an acute angle at the intersecting portion 16 as shown in Fig. 4.

### (Fourth Embodiment)

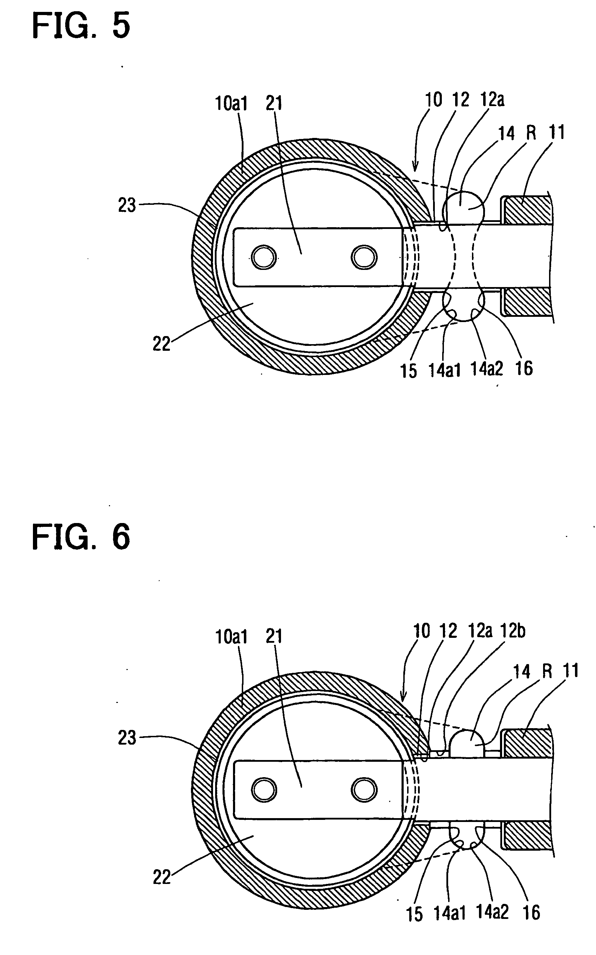

Next, an exhaust gas recirculation control device 1 according to the fourth embodiment will be explained based on Fig. 5. As shown in Fig. 5, in the exhaust gas recirculation control device 1 of the fourth embodiment, an intersecting portion 15 is formed at the intersection of the first inner surface 14a1 of the deposit returning groove 14a on the gas passage 10a side and the inner surface 12a of the accommodation hole 12. Moreover, another intersecting portion 16 is formed at the intersection of the second inner surface 14a2 of the deposit returning groove 14a on the bearing 11 side and the inner surface 12a of the accommodation hole 12 as shown in Fig. 5. Thus, the intersecting portion, which provides the acute angle capable of reducing the rotational force of the valve shaft 21 required to strip off the firmly fixed deposits, can be formed on at least one of the first inner surface 14a1 and the second inner surface 14a2 of the deposit returning groove 14a. Therefore, the firmly fixed deposits can be stripped off easily by performing the driving control of the driving motor 60 to rotate the valve shaft 21.

### (Fifth Embodiment)

Next, an exhaust gas recirculation control device 1 according to the fifth embodiment will be explained based on Fig. 6. In the exhaust gas recirculation control device 1 of the fifth embodiment, a stepped portion 12b is formed in the accommodation hole 12 on the bearing 11 side, where the communication passage 14 opens, as shown in Fig. 6. An internal diameter of the stepped portion 12b is larger than the other portion of the inner surface 12a of the accommodation hole 12 as shown in Fig. 6.

Thus, the volume of the deposit holding area R can be enlarged. Therefore, the particulate matters and the like included in the exhaust gas entering the gap between the valve shaft 21 and the accommodation hole 12 from the gas passage 10a can be held in the deposit holding area R until the particulate matters and the like are discharged through the communication passage 14. Thus, the adhesion or deposition of the particulate matters and the like can be delayed more. As a result, the discharging performance of the particulate matters or the deposits through the communication passage 14 can be improved.

### (Sixth Embodiment)

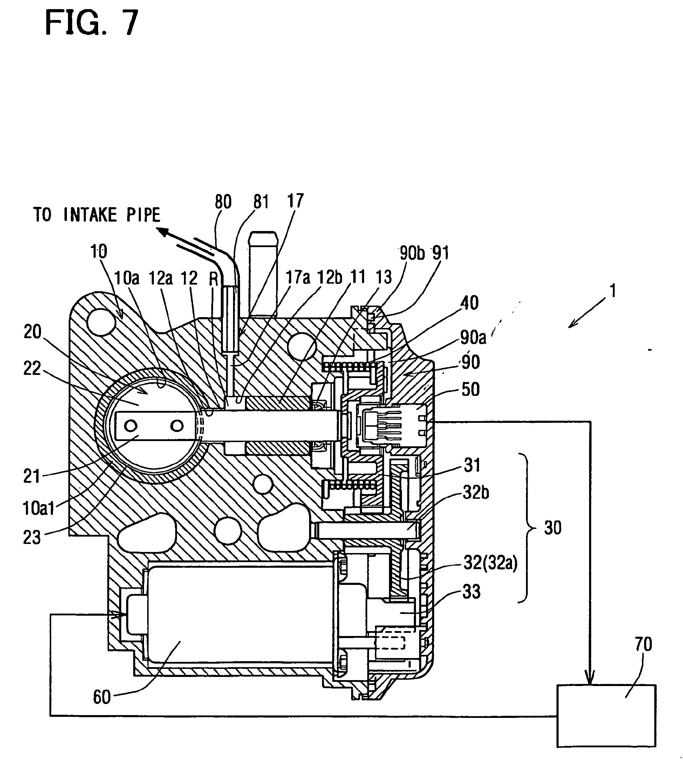

Next, an exhaust gas recirculation control device 1 according to the sixth embodiment will be explained based on Fig. 7. The exhaust gas recirculation control device 1 of the sixth embodiment is formed with a negative pressure generating passage 17 connected with a negative pressure source (the intake pipe, in the present embodiment) as shown in Fig. 7. The negative pressure generating passage 17 opens into the accommodation hole 12. Thus, the particulate matters or the deposits included in the exhaust gas entering the gap between the valve shaft 21 and the accommodation hole 12 from the gas passage 10a can be discharged through the negative pressure generating passage 17 and a pipe 80 compulsorily with the use of the negative pressure provided by the negative pressure source, instead of the pressure difference generated in the communication passage 14.

In the present embodiment, the intake pipe for drawing the air with the use of the negative pressure generated in the combustion chambers of the internal combustion engine is used as the negative pressure source. Thus, an additional device as the negative pressure source is not required and inexpensive structure can be provided.

Moreover, the negative pressure generating passage 17 leading from the accommodation hole 12 to the outside of the valve housing 10 has a passage 17a, which is formed in the valve housing 10 and opens into the accommodation hole 12, and a pipe 81 fixed to the passage 17a by press-fitting and the like as shown in Fig. 7. Thus, only a process for connecting the pipe 80 such as a rubber hose to the pipe 81 is required as an assembling process for connecting the negative pressure generating passage 17 with the intake pipe. As a result, the assembling process is facilitated.

The accommodation hole 12 is formed with a stepped portion 12b on the bearing 11 side as shown in Fig. 7. A diameter of the stepped portion 12b is set to be substantially equal to the external diameter of the bearing 11. Therefore, even in the case where the internal diameter of the negative pressure generating passage 17 is small, a relatively large deposit holding area R can be ensured.

A deposit returning groove may be formed like the above embodiments.

### (Seventh Embodiment)

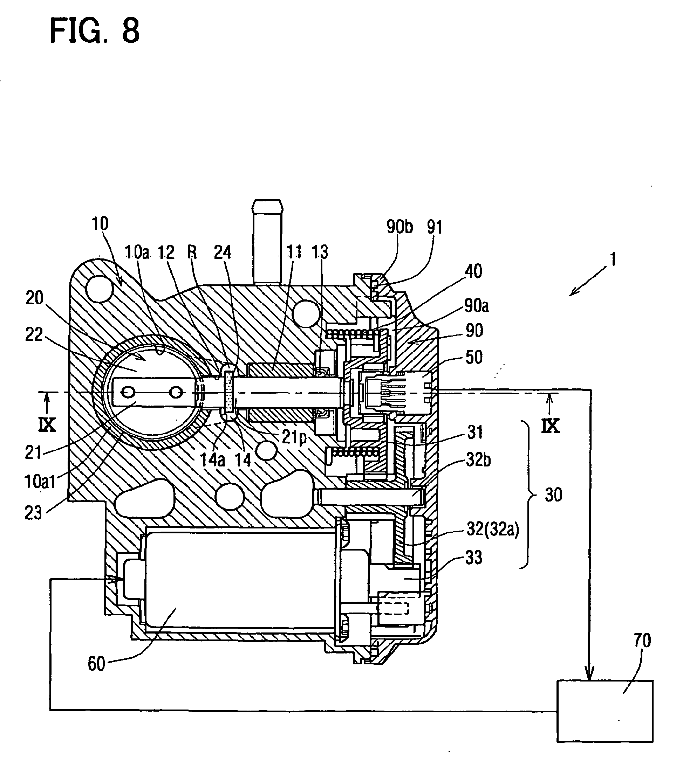

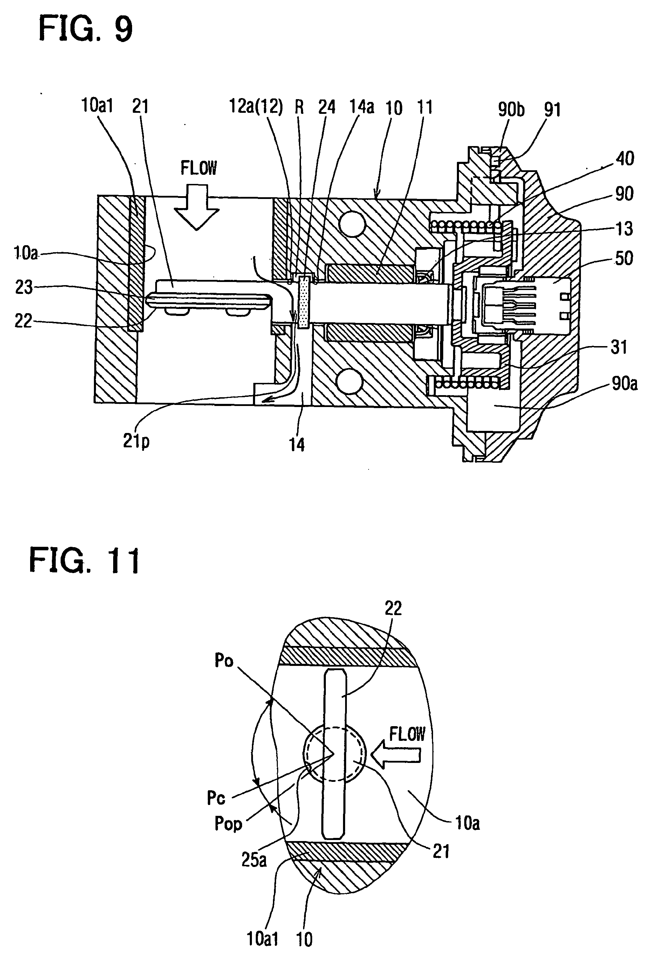

Next, an exhaust gas recirculation control device 1 according to the seventh embodiment will be explained base on Figs. 8 and 9. As shown in Figs. 8 and 9, the exhaust gas recirculation control device 1 of the seventh embodiment has a plate 24 formed substantially in the shape of a round plate in the deposit returning groove 14a. The plate 24 is disposed around a valve shaft portion 21p of the valve shaft 21, where the valve shaft 21 faces the deposit returning groove 14a. As shown in Figs. 8 and 9, a diameter of the plate 24 is larger than the internal diameter of the accommodation hole 12.

Thus, even if the particulate matters and the like included in the exhaust gas enter the gap between the valve shaft 21 and the accommodation hole 12 from the gas passage 10a, the plate 24 having the diameter larger than the internal diameter of the accommodation hole 12 functions as a baffle plate for preventing the movement of the particulate matters toward the bearing 11.

Moreover, since the plate 24 is disposed in the range of the deposit returning groove 14a, the plate 24 can function as a guiding plate for guiding the particulate matters and the like, which enter the deposit returning groove 14a through the gap between the valve shaft 21 and the accommodation hole 12, to the gas passage 10a downstream of the communication passage 14 more effectively as shown in Fig. 9.

### (Eighth Embodiment)

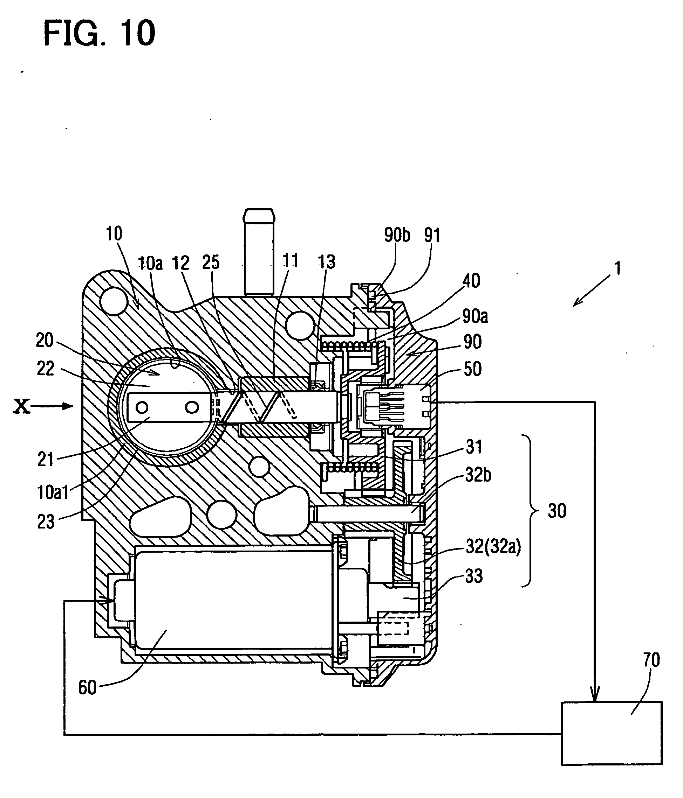

Next, an exhaust gas recirculation control device according to the eighth embodiment, which is not part of the present invention, will be explained based on Figs. 10 and 11. As shown in Figs. 10 and 11, the exhaust gas recirculation control device 1 of the eighth embodiment is formed with a spiral groove 25 on a peripheral surface of the valve shaft 21. An end opening 25a of the spiral groove 25 opens into the gas passage 10a, and the spiral groove 25 extends throughout the range where the bearing 11 extends.

Thus, even if the particulate matters and the like included in the exhaust gas enter the gap between the bearing 11 and the valve shaft 21 from the gas passage 10a, the particulate matters and the like adhering to the inner surface of the bearing 11 can be stripped off by the rotational movement of the spiral groove 25 when the valve shaft 21 is rotated to open or close the butterfly valve 20. Moreover, even if the particulate matters and the like adhere to the inner surface of the bearing 11 and are deposited there, the deposits can be stripped off by the rotational movement of the spiral groove 25. Moreover, the particulate matters and the like stripped off or the deposits stripped off and crushed by the spiral groove 25 can be returned to the gas passage 10a through the spiral groove 25. Therefore, blockage of the gap between the bearing 11 and the valve shaft 21 caused by the particulate matters or the deposits can be prevented. As a result, the sticking caused by the deposits entering the bearing 11 can be prevented.

Moreover, the end opening 25a of the spiral groove 25 opening into the gas passage 10a is formed at a periphery of the valve shaft 21 so that the end opening 25a is positioned downstream of the valve member 22 throughout the operation range of the butterfly valve 20 as shown in Fig. 11. Therefore, the particulate matters or the deposits stripped off can be discharged to the gas passage 10a downstream of the valve member 22 through the end opening 25a assuredly. As a result, the discharged particulate matters and the deposits are prevented from reentering the bearing 11 along the valve shaft 21. The position of the valve member 22 shown in Fig. 11 is the fully close position. A position Pc in Fig. 11 represents the position of the end opening 25a of the spiral groove 25 when the valve member 22 is at the fully close position. The other positions Po, Pop in Fig. 11 represent the positions of the end opening 25a of the spiral groove 25 when the valve member 22 is positioned at the fully open position and the opener position respectively. The opener position is positioned on an opposite side of the fully close position from the fully open position along the rotation of the valve shaft 21.

The butterfly valve 20 rotates in the range from the fully close position to the fully open position of the valve member 22 in order to regulate the flow rate of the exhaust gas flowing through the gas passage 10a. In addition to the above range, if the butterfly valve 20 is mechanically rotated from the fully close position to the opener position in the opposite direction when the energization to the driving motor 60 is stopped, the end opening 25a should be positioned at the periphery of the valve shaft 21 so that the end opening 25a is positioned downstream of the valve member 22 throughout the entire operation range of the valve member 22 including the range where the butterfly valve 20 is mechanically rotated from the fully close position to the opener position.

The present invention should not be limited to the disclosed embodiments, but may be implemented in many other ways without departing from the scope of the invention as defined by the appended claims.

## Claims

1. An exhaust gas recirculation control device (1), which has a valve housing (10) formed with a gas passage (10a) inside, a butterfly valve (20) capable of opening or closing the gas passage (10a) and a driving motor (60) for driving a valve shaft (21) of the butterfly valve (20), wherein the exhaust gas recirculation control device (1) recirculates exhaust gas, which is discharged from a combustion chamber of an internal combustion engine, into an intake pipe through the gas passage (10a) with the use of rotational movement of the driving motor (60),
**characterized in that**
the exhaust gas recirculation control device (1) has a valve member (22) of the butterfly valve (20) accommodated in the gas passage (10a) and a bearing (11) of the valve housing (10), wherein the valve member (22) and the bearing (11) are disposed on the valve shaft (21) in a line in a longitudinal direction of the valve shaft (21), and
the exhaust gas recirculation control device (1) is formed with an accommodation hole (12) for accommodating the valve shaft (21) between the gas passage (10a) and the bearing (11) and with a low-pressure communication passage (14) that opens into the accommodation hole (12) and communicates with a low-pressure portion, pressure in which is lower than pressure in a portion upstream of the butterfly valve (20).

2. An exhaust gas recirculation control device (1) as in claim 1, wherein the low-pressure portion communication passage is provided by a communication passage (14) opening into the gas passage (10a)downstream of the butterfly valve (20).

3. The exhaust gas recirculation control device (1) as in claim 2, further **characterized in that**
the exhaust gas recirculation control device (1) is formed with a deposit returning groove (14a) at an end of the communication passage (14) on the accommodation hole (12) side for returning deposits to the gas passage (10a), and
the exhaust gas recirculation control device (1) is formed with a deposit holding area for holding the deposits in an area defined at least by the deposit returning groove (14a) and the valve shaft (21).

4. The exhaust gas recirculation control device (1) as in claim 3, further **characterized in that** the deposit returning groove (14a) extends circumferentially around the valve shaft (21) and is formed substantially in the shape of a ring.

5. The exhaust gas recirculation control device (1) as in claim 3, further **characterized in that** the exhaust gas recirculation control device (1) is provided with an intersecting portion (15, 16), at which an inner surface (12a) of the accommodation hole (12) and an inner surface (14a1, 14a2) of the deposit returning groove (14a) intersect with each other in an acute angle.

6. The exhaust gas recirculation control device (1) as in claim 3, further **characterized by** a plate (24) that is disposed around a valve shaft portion (21p) of the valve shaft (21) facing the deposit returning groove (14a) in a range of the width of the deposit returning groove (14a) and has a diameter larger than an inner diameter of the accommodation hole (12).

7. The exhaust gas recirculation control device (1) as in claim 2, further **characterized in that**
the accommodation hole (12) is formed with a stepped portion (12b) on the bearing (11) side, and
the exhaust gas recirculation control device (1) is formed with a deposit holding area for holding deposits, the deposit holding area being provided at least by the valve shaft (21) and the stepped portion (12b).

8. An exhaust gas recirculation control device (1) as in claim 1, wherein the low-pressure portion communication passage is provided by a negative pressure generating passage (17) connected with a negative pressure source.

9. The exhaust gas recirculation control device (1) as in claim 8, further **characterized in that**
the negative pressure source is the intake pipe, and
the negative pressure generating passage (17) is connected with the intake pipe through a pipe (80).

10. The exhaust gas recirculation control device (1) as in claim 8, further **characterized in that**
the exhaust gas recirculation control device (1) is formed with a deposit returning groove at an end of the negative pressure generating passage (17) on the accommodation hole (12) side for discharging deposits to the negative pressure source, and
the exhaust gas recirculation control device (1) is formed with a deposit holding area for holding the deposits in an area defined at least by the deposit returning groove and the valve shaft (21).

11. The exhaust gas recirculation control device (1) as in claim 10, further **characterized in that** the deposit returning groove extends circumferentially around the valve shaft (21) and is formed substantially in the shape of a ring.

12. The exhaust gas recirculation control device (1) as in claim 10, further **characterized in that** the exhaust gas recirculation control device (1) is provided with an intersecting portion, at which an inner surface (12a) of the accommodation hole (12) and an inner surface of the deposit returning groove intersect with each other in an acute angle.

13. The exhaust gas recirculation control device (1) as in claim 10, further **characterized by** a plate (24) that is disposed around a valve shaft portion of the valve shaft (21) facing the deposit returning groove in a range of width of the deposit returning groove and has a diameter larger than an inner diameter of the accommodation hole (12).

14. The exhaust gas recirculation control device (1) as in claim 8, further **characterized in that**
the accommodation hole (12) is formed with a stepped portion (12b) on the bearing (11) side, and
the exhaust gas recirculation control device (1) is formed with a deposit holding area for holding deposits, the deposit holding area being provided at least by the valve shaft (21) and the stepped portion (12b).

15. The exhaust gas recirculation control device (1) as in claim 2 or 8, further **characterized in that** the valve member (22) is fixed on an end of the valve shaft (21).

16. The exhaust gas recirculation control device (1) as in claim 2 or 8, further **characterized in that** the driving motor (60) drives the valve shaft (21) through a speed-reduction device (30).

17. The exhaust gas recirculation control device (1) as in claim 16, further **characterized in that** the driving motor (60) is a direct current motor.

## Patentansprüche

1. Abgasrückführungssteuervorrichtung (1), die ein Ventilgehäuse (10), das im Inneren mit einem Gasdurchgang (10a) ausgebildet ist, ein Drosselventil (20), das in der Lage ist, den Gasdurchgang zu öffnen oder zu schließen, und einen Antriebsmotor (60) zum Antreiben einer Ventilwelle (21) des Drosselventils (20) aufweist, wobei die Abgasrückführungssteuervorrichtung (1) ein Abgas, das von einer Verbrennungskammer einer Brennkraftmaschine abgegeben wird, durch den Gasdurchgang (10a) in eine Einlassleitung mit Hilfe einer Drehbewegung des Antriebsmotors (60) rückführt,
**dadurch gekennzeichnet, dass**
die Abgasrückführungssteuervorrichtung (1) ein Ventilelement (22) des Drosselventils (20), das in dem Abgasdurchgang (10a) untergebracht ist, und ein Lager (11) des Ventilgehäuses (10) aufweist, wobei das Ventilelement (22) und das Lager (11) an der Ventilwelle (21) in einer Reihe in einer längsverlaufenden Richtung der Ventilwelle (21) angeordnet sind, und
die Abgasrückführungssteuervorrichtung (1) mit einem Aufnahmeloch (12) zum Aufnehmen der Ventilwelle (21) zwischen dem Gasdurchgang (10a) und dem Lager (11) und mit einem Niederdruckverbindungsdurchgang (14) ausgebildet ist, der sich in dem Aufnahmeloch (12) öffnet und mit einem Niederdruckabschnitt verbunden ist, in dem ein Druck kleiner als ein Druck in einem Abschnitt stromaufwärtig des Drosselventils (20) ist.

2. Abgasrückführungssteuervorrichtung (1) gemäß Anspruch 1, wobei der Niederdruckabschnittsverbindungsdurchgang durch einen Verbindungsdurchgang (14) vorgesehen ist, der sich in dem Gasdurchgang (10a) stromabwärtig des Drosselventils (20) öffnet.

3. Abgasrückführungssteuervorrichtung gemäß Anspruch 2, weiter **dadurch gekennzeichnet, dass**
die Abgasrückführungssteuervorrichtung (1) mit einer Ablagerungszurückführnut (14a) an einem Ende des Verbindungsdurchgangs (14) an der Aufnahmelochseite zum Zurückführen von Ablagerungen zu dem Gasdurchgang (10a) ausgebildet ist, und
die Abgasrückführungssteuervorrichtung (1) mit einem Ablagerungsfesthaltebereich zum Festhalten der Ablagerungen in einem Bereich ausgebildet ist, der zumindest durch die Ablagerungszurückführnut (14a) und die Ventilwelle (21) definiert ist.

4. Abgasrückführungssteuervorrichtung (1) gemäß Anspruch 3, weiter **dadurch gekennzeichnet, dass** sich die Ablagerungszurückführnut (14a) rings um die Ventilwelle (21) erstreckt und im Wesentlichen in der Form eines Rings ausgebildet ist.

5. Abgasrückführungssteuervorrichtung (1) gemäß Anspruch 3, weiter **dadurch gekennzeichnet, dass** die Abgasrückführungssteuervorrichtung (1) mit einem Überschneidungsabschnitt (15, 16) vorgesehen ist, an dem sich eine innere Fläche (12a) des Aufnahmelochs (12) und eine innere Fläche (14a1, 14a2) der Ablagerungszurückführnut (14a) miteinander in einem spitzen Winkel überschneiden.

6. Abgasrückführungssteuervorrichtung (1) gemäß Anspruch 3, weiter **gekennzeichnet durch** eine Platte (24) die um einen Ventilwellenabschnitt (21p) der Ventilwelle (21) angeordnet ist, und die zu der Ablagerungszurückführnut (14a) in einem Bereich der Breite der Ablagerungszurückführnut (14a) zugewandt ist und einen größeren Durchmesser als ein innerer Durchmesser des Aufnahmelochs (12) aufweist.

7. Abgasrückführungssteuervorrichtung (1) gemäß Anspruch 2, weiter **dadurch gekennzeichnet, dass**
das Aufnahmeloch (12) mit einem gestuften Abschnitt (12b) an der Lagerseite ausgebildet ist, und
die Abgasrückführungssteuervorrichtung (1) mit einem Ablagerungsfesthaltebereich zum Festhalten von Ablagerungen ausgebildet ist, wobei der Ablagerungsfesthaltebereich zumindest durch die Ventilwelle (21) und den gestuften Abschnitt (12b) vorgesehen ist.

8. Abgasrückführungssteuervorrichtung (1) gemäß Anspruch 1, wobei der Niederdruckabschnittsverbindungsdurchgang durch einen Unterdruckerzeugungsdurchgang (17) vorgesehen ist, der mit einer Unterdruckquelle verbunden ist.

9. Abgasrückführungssteuervorrichtung (1) gemäß Anspruch 8, weiter **dadurch gekennzeichnet, dass**
die Unterdruckquelle die Einlassleitung ist, und
der Unterdruckerzeugungsdurchgang (17) durch eine Leitung (80) mit der Einlassleitung verbunden ist.

10. Abgasrückführungssteuervorrichtung (1) gemäß Anspruch 8, weiter **dadurch gekennzeichnet, dass**
die Abgasrückführungssteuervorrichtung (1) mit einer Ablagerungszurückführnut an einem Ende des Unterdruckerzeugungsdurchgangs (17) an der Aufnahmelochseite zum Abgeben von Ablagerungen zu der Unterdruckquelle ausgebildet ist, und
die Abgasrückführungssteuervorrichtung (1) mit einem Ablagerungsfesthaltebereich zum Festhalten der Ablagerungen in einem Bereich ausgebildet ist, der zumindest durch die Ablagerungszurückführnut und die Ventilwelle (21) definiert ist.

11. Abgasrückführungssteuervorrichtung (1) gemäß Anspruch 10, weiter **dadurch gekennzeichnet, dass** sich die Ablagerungszurückführnut rings um die Ventilwelle (21) erstreckt und im Wesentlichen in der Form eines Rings ausgebildet ist.

12. Abgasrückführungssteuervorrichtung (1) gemäß Anspruch 10, weiter **dadurch gekennzeichnet, dass** die Abgasrückführungssteuervorrichtung (1) mit einem Überschneidungsabschnitt vorgesehen ist, an dem sich eine innere Fläche (12a) des Aufnahmelochs (12) und eine innere Fläche der Ablagerungszurückführnut miteinander in einem spitzen Winkel überschneiden.

13. Abgasrückführungssteuervorrichtung (1) gemäß Anspruch 10, weiter **gekennzeichnet durch** eine Platte (24), die um einen Ventilwellenabschnitt der Ventilwelle (21) angeordnet ist, und die zu der Ablagerungszurückführnut in einem Bereich einer Breite der Ablagerungszurückführnut zugewandt ist und einen größeren Durchmesser als ein innerer Durchmesser des Aufnahmelochs (12) aufweist.

14. Abgasrückführungssteuervorrichtung (1) gemäß Anspruch 8, weiter **dadurch gekennzeichnet, dass**
das Aufnahmeloch (12) mit einem gestuften Abschnitt (12b) an der Lagerseite ausgebildet ist, und
die Abgasrückführungssteuervorrichtung (1) mit einem Ablagerungsfesthaltebereich zum Festhalten von Ablagerungen ausgebildet ist, wobei der Ablagerungsfesthaltebereich zumindest durch die Ventilwelle (21) und den gestuften Abschnitt (12b) vorgesehen ist.

15. Abgasrückführungssteuervorrichtung (1) gemäß Anspruch 2 oder 8, weiter **dadurch gekennzeichnet, dass** das Ventilelement (22) an einem Ende der Ventilwelle (21) befestigt ist.

16. Abgasrückführungssteuervorrichtung (1) gemäß Anspruch 2 oder 8, weiter **dadurch gekennzeichnet, dass** der Antriebsmotor (60) die Ventilwelle (21) durch eine Drehzahlreduktionsvorrichtung (30) antreibt.

17. Abgasrückführungssteuervorrichtung (1) gemäß Anspruch 16, weiter **dadurch gekennzeichnet, dass** der Antriebsmotor (60) ein Gleichstrommotor ist.

## Revendications

1. Dispositif de commande de recirculation de gaz d'échappement (1), qui a un logement de soupape (10) formé avec un passage de gaz (10a) à l'intérieur, une soupape à papillon (20) capable d'ouvrir ou de fermer le passage de gaz (10a) et un moteur d'entraînement (60) pour entraîner une tige de soupape (21) de la soupape à papillon (20), dans lequel le dispositif de commande de recirculation de gaz d'échappement (1) remet en circulation les gaz d'échappement, qui sont déchargés d'une chambre de combustion d'un moteur à combustion interne, dans un tuyau d'admission à travers le passage de gaz (10a) grâce à l'utilisation du mouvement de rotation du moteur d'entraînement (60),
**caractérisé en ce que**
le dispositif de commande de recirculation de gaz d'échappement (1) a un élément de soupape (22) de la soupape à papillon (20) reçu dans le passage de gaz (10a) et un palier (11) du logement de soupape (10), dans lequel l'élément de soupape (22) et le palier (11) sont disposés sur la tige de soupape (21) sur une ligne dans une direction longitudinale de la tige de soupape (21), et
le dispositif de commande de recirculation de gaz d'échappement (1) est formé avec un trou de réception (12) pour recevoir la tige de soupape (21) entre le passage de gaz (10a) et le palier (11) et avec un passage de communication basse pression (14) qui s'ouvre dans le trou de réception (12) et communique avec une portion basse pression, la pression dans laquelle est plus basse que la pression dans une portion en amont de la soupape à papillon (20).

2. Dispositif de commande de recirculation de gaz d'échappement (1) selon la revendication 1, dans lequel le passage de communication de portion basse pression est prévu avec un passage de communication (14) s'ouvrant dans le passage de gaz (10a) en aval de la soupape à papillon (20).

3. Dispositif de commande de recirculation de gaz d'échappement (1) selon la revendication 2, **caractérisé en outre en ce que**
le dispositif de commande de recirculation de gaz d'échappement (1) est formé avec une gorge de retour de dépôts (14a) à une extrémité du passage de communication (14) sur le côté trou de réception (12) pour renvoyer les dépôts dans le passage de gaz (10a), et
le dispositif de commande de recirculation de gaz d'échappement (1) est formé avec une zone de retenue de dépôts pour retenir les dépôts dans une zone définie au moins par la gorge de retour de dépôts (14a) et la tige de soupape (21).

4. Dispositif de commande de recirculation de gaz d'échappement (1) selon la revendication 3, **caractérisé en outre en ce que** la gorge de retour de dépôts (14a) s'étend circonférentiellement autour de la tige de soupape (21) et est formée substantiellement sous la forme d'une bague.

5. Dispositif de commande de recirculation de gaz d'échappement (1) selon la revendication 3, **caractérisé en outre en ce que** le dispositif de commande de recirculation de gaz d'échappement (1) est prévu avec une portion d'intersection (15, 16), au niveau de laquelle une surface intérieure (12a) du trou de réception (12) et une surface intérieure (14a1, 14a2) de la gorge de retour de dépôts (14a) se coupent l'une avec l'autre selon un angle aigu.

6. Dispositif de commande de recirculation de gaz d'échappement (1) selon la revendication 3, **caractérisé en outre par** une plaque (24) qui est disposée autour d'une portion de tige de soupape (21p) de la tige de soupape (21) faisant face à la gorge de retour de dépôts (14a) dans une plage de la largeur de la gorge de retour de dépôts (14a) et a un diamètre plus grand qu'un diamètre intérieur du trou de réception (12).

7. Dispositif de commande de recirculation de gaz d'échappement (1) selon la revendication 2, **caractérisé en outre en ce que**
le trou de réception (12) est formé avec une portion à épaulement (12b) sur le côté palier (11), et
le dispositif de commande de recirculation de gaz d'échappement (1) est formé avec une zone de retenue de dépôts pour retenir les dépôts, la zone de retenue de dépôts étant constituée au moins par la tige de soupape (21) et la portion à épaulement (12b).

8. Dispositif de commande de recirculation de gaz d'échappement (1) selon la revendication 1, dans lequel le passage de communication de portion basse pression est constitué par un passage de génération de pression négative (17) connecté à une source de pression négative.

9. Dispositif de commande de recirculation de gaz d'échappement (1) selon la revendication 8, **caractérisé en outre en ce que**
la source de pression négative est le tuyau d'admission, et
le passage de génération de pression négative (17) est connecté avec le tuyau d'admission par l'intermédiaire d'un tuyau (80).

10. Dispositif de commande de recirculation de gaz d'échappement (1) selon la revendication 8, **caractérisé en outre en ce que**
le dispositif de commande de recirculation de gaz d'échappement (1) est formé avec une gorge de retour de dépôts à une extrémité du passage de génération de pression négative (17) sur le côté trou de réception (12) pour décharger les dépôts à la source de pression négative, et
le dispositif de commande de recirculation de gaz d'échappement (1) est formé avec une zone de retenue de dépôts pour retenir les dépôts dans une zone définie au moins par la gorge de retour de dépôts et la tige de soupape (21).

11. Dispositif de commande de recirculation de gaz d'échappement (1) selon la revendication 10, **caractérisé en outre en ce que** la gorge de retour de dépôts s'étend circonférentiellement autour de la tige de soupape (21) et est formée substantiellement sous la forme d'une bague.

12. Dispositif de commande de recirculation de gaz d'échappement (1) selon la revendication 10, **caractérisé en outre en ce que** le dispositif de commande de recirculation de gaz d'échappement (1) est prévu avec une portion d'intersection, au niveau de laquelle une surface intérieure (12a) du trou de réception (12) et une surface intérieure de la gorge de retour de dépôts se coupent l'une avec l'autre selon un angle aigu.

13. Dispositif de commande de recirculation de gaz d'échappement (1) selon la revendication 10, **caractérisé en outre par** une plaque (24) qui est disposée autour d'une portion de tige de soupape de la tige de soupape (21) faisant face à la gorge de retour de dépôts dans une plage de la largeur de la gorge de retour de dépôts et a un diamètre plus grand qu'un diamètre intérieur du trou de réception (12).

14. Dispositif de commande de recirculation de gaz d'échappement (1) selon la revendication 8, **caractérisé en outre en ce que**
le trou de réception (12) est formé avec une portion à épaulement (12b) sur le côté palier (11), et
le dispositif de commande de recirculation de gaz d'échappement (1) est formé avec une zone de retenue de dépôts pour retenir les dépôts, la zone de retenue de dépôts étant constituée au moins par la tige de soupape (21) et la portion à épaulement (12b).

15. Dispositif de commande de recirculation de gaz d'échappement (1) selon la revendication 2 ou 8, **caractérisé en outre en ce que** l'élément de soupape (22) est fixé sur une extrémité de la tige de soupape (21).

16. Dispositif de commande de recirculation de gaz d'échappement (1) selon la revendication 2 ou 8, **caractérisé en outre en ce que** le moteur d'entraînement (60) entraîne la tige de soupape (21) par l'intermédiaire d'un dispositif de réduction de vitesse (30).

17. Dispositif de commande de recirculation de gaz d'échappement (1) selon la revendication 16, **caractérisé en outre en ce que** le moteur d'entraînement (60) est un moteur à courant continu.
